# NEUE EUROPÄISCHE PATENTSCHRIFT

(11) **EP 2 357 115 B2**
(45) Veröffentlichungstag und Bekanntmachung des Hinweises auf die Entscheidung über den Einspruch: **06.03.2024**
(45) Hinweis auf die Patenterteilung: 14.08.2019
(21) Anmeldenummer: 10015060.6
(22) Anmeldetag: 27.11.2010
(51) Int. Cl.: B60T 17/02

(54) **Druckluftkompressor und Verfahren zum Betrieb eines Druckluftkompressors**
Pressurised air compressor and method for operating same
Compresseur à air comprimé et procédé de fonctionnement d'un compresseur à air comprimé

(30) Priorität: 16.02.2010 DE 102010008063
(43) Veröffentlichungstag der Anmeldung: 17.08.2011
(73) Patentinhaber: ZF CV Systems Hannover GmbH, 30453 Hannover (DE)
(72) Erfinder: Jordan, Steffen, 30952 Ronnenberg (DE); Wilken, Christoph, 48499 Salzbergen (DE)
(74) Vertreter: Günther, Constantin

(56) Entgegenhaltungen:
- EP-A1- 1 160 142
- DE-A1- 10 321 771
- DE-A1-102004 047 975
- US-A- 5 839 887
- US-A1- 2004 148 932
- US-A1- 2007 160 484

## Beschreibung

Die Erfindung betrifft einen Druckluftkompressor zur Erzeugung von Druckluft für eine Druckluftanlage eines Fahrzeugs gemäß dem Oberbegriff des Patentanspruchs 1. Die Erfindung betrifft ferner eine Druckluftanlage mit einem solchen Druckluftkompressor sowie ein Verfahren zum Betrieb eines solchen Druckluftkompressors.

Derartige Druckluftkompressoren werden beispielsweise für die Drucklufterzeugung für pneumatische Bremsanlagen in Nutzfahrzeugen, d.h. Lastkraftwagen, verwendet. Im Bereich von Personenkraftwagen werden Druckluftkompressoren beispielsweise für die Drucklufterzeugung von pneumatischen Niveauregelungsanlagen eingesetzt. Im Bereich der Nutzfahrzeuge wird ein solcher Druckluftkompressor in der Regel über den Antriebsmotor des Fahrzeugs angetrieben. Im Bereich der Personenkraftwagen erfolgt der Antrieb des Druckluftkompressors über einen eigens dafür vorgesehenen Elektromotor.

Ein hierbei verwendeter Druckluftkompressor ist in der Regel als Kolbenmaschine aufgebaut und weist daher einen Zylinder und einen im Zylinder angeordneten Kolben auf. Der Kolben unterteilt den Innenraum des Zylinders in einen Kompressionsraum und in einen davon druckseitig getrennten Raum, der im Allgemeinen mit dem Kurbelgehäuse des Kompressors in Verbindung steht. Dieser Raum sei nachfolgend als Neutralraum bezeichnet.

Der Betrieb eines solchen Kolbenkompressors beinhaltet eine Ansaugphase, in der infolge einer Kolbenbewegung das Volumen des Kompressionsraumes vergrößert wird und dabei Luft aus der Atmosphäre angesaugt und über ein Einlassventil in den Kompressionsraum geführt wird. Auf die Ansaugphase folgt eine Verdichtungsphase, in der das Volumen des Kompressionsraums durch eine entgegengesetzte Bewegung des Kolbens verringert wird. Hierbei wird das Einlassventil geschlossen, so dass die im Kompressionsraum befindliche Luft nicht entweichen kann. Die Luft im Kompressionsraum wird solange verdichtet, bis der Kolben seinen Totpunkt erreicht und das Volumen des Kompressionsraums minimiert ist bzw. bis die komprimierte Luft über ein Auslassventil an am Kompressorausgang angeschlossene Komponenten der Druckluftanlage abgegeben wird. Während der Verdichtungsphase steigt das für den Antrieb des Kompressors aufzuwendende Drehmoment bis zu seinem Maximalwert an. Dieser Maximalwert verringert sich bis zum Erreichen des Totpunkts wieder auf Null.

Der Erfindung liegt die Aufgabe zugrunde, die Drucklufterzeugung mit einem Druckluftkompressor in Kolben/Zylinder-Bauweise dahingehend zu verbessern, dass der Maximalwert des für den Antrieb des Kompressors aufzuwendenden Drehmoments verringert ist.

Diese Aufgabe wird durch die Erfindung gemäß den Ansprüchen 1, 7 und 8 gelöst. Die Unteransprüche geben vorteilhafte Ausgestaltungen der Erfindung an.

Die oben beschriebene Funktionsweise eines Kolbenkompressors hat zur Folge, dass der im Neutralraum vorliegende Druck während einer Ansaugphase bezogen auf einen im zeitlichen Mittel vorliegenden Druckwert ansteigt und in einer Verdichtungsphase abfällt. Im zeitlichen Mittel liegt im Neutralraum z.B. Atmosphärendruck vor. Während der Ansaugphase steigt der Druck im Neutralraum auf einen Wert oberhalb des zeitlichen Mittelwerts des Drucks, in der Verdichtungsphase fällt der Druck im Neutralraum auf einen Wert unterhalb des zeitlichen Mittelwerts des Drucks. Gemäß der Erfindung wird vorgeschlagen, den Neutralraum des Druckluftkompressors mit einem Zusatzdruck zu beaufschlagen, so dass der Druck im Neutralraum im zeitlichen Mittel oberhalb des Atmosphärendrucks ist.

Die Erfindung hat den Vorteil mit einfachen, kostengünstigen Mitteln das erforderliche Maximaldrehmoment zum Antrieb des Druckluftkompressors erheblich zu verringern, nämlich etwa auf die Hälfte des bei einem vergleichbaren Druckluftkompressor sonst erforderlichen Drehmoments. Vorteilhaft kann die Erfindung auch bei vorhandenen Kompressorkonstruktionen ohne großen Aufwand eingesetzt werden. Daher ist zu einer Realisierung der Erfindung nicht eine völlige Neukonstruktion eines Kompressors erforderlich. Es ist lediglich eine Möglichkeit für die Zufuhr des Zusatzdrucks zu dem Neutralraum am Kompressor vorzusehen, z.B. ein zusätzlicher Druckluftanschluss, der mit dem Neutralraum verbunden ist und die Einspeisung von Druck aus der Druckluftanlage erlaubt. Sofern das Kurbelgehäuse des Druckluftkompressors nicht druckdicht ist, ist als ergänzende Maßnahme das Kurbelgehäuse druckdicht zu gestalten.

Der Zusatzdruck kann im Prinzip an beliebiger Stelle der Druckluftanlage abgezweigt werden, z.B. am Kompressorausgang, an einem Druckluftspeicher oder an der Druckluftaufbereitungsanlage.

Mittels der Erfindung wird der Drehmomentverlauf des erforderlichen Antriebsmoments des Druckluftkompressors über den Verlauf der Kurbelwellenumdrehung vergleichmäßigt. Dabei auftretende Spitzendrehmomente, d.h. die Maximalwerte des für den Antrieb des Kompressors aufzuwendenden Drehmoments, können ungefähr halbiert werden. Hierdurch kann ein Antriebsmotor für den Kompressor, z.B. ein Elektromotor, kleiner und mit geringerem verfügbaren Drehmoment gewählt werden. Dies erlaubt eine Kosten- und Gewichtsersparnis, die insbesondere in Personenkraftwagen, aber auch in Nutzfahrzeugen, sehr vorteilhaft ist.

Ein weiterer Vorteil der Erfindung besteht darin, dass durch die erhebliche Verringerung des Spitzendrehmoments auch resultierende Kräfte innerhalb des Druckluftkompressors reduziert werden, so zum Beispiel die Maximalwerte der Kräfte, die auf die Kurbelwellen- und Pleuellager wirken. Des Weiteren werden die Querkräfte vom Kolben auf die Zylinderwand ebenfalls verringert. Hierdurch wird der Druckluftkompressor robuster und langlebiger, was besonders bei ölfreien Anwendungen vorteilhaft ist.

Die Erfindung ist vorteilhaft für Kompressoren in Kolben-/Zylinder-Bauweise in jeglicher Bauart einsetzbar, z.B. für Einzylinder-, Zweizylinder- oder beliebige Mehrzylinder-Kompressoren. Die Erfindung kann auch vorteilhaft bei Kompressoren eingesetzt werden, die nach dem Doppelkurbelwellenprinzip arbeiten, d.h. Kompressoren, die zwei Pleuel pro Zylinder und zwei Kurbelwellen aufweisen, wie z.B. aus der DE 10 2006 060 660 A1 bekannt.

Gemäß der Erfindung ist der Neutralraum mit einer Druckluftstabilisationseinrichtung zur Erzeugung eines stabilisierten Zusatzdrucks verbunden. Die Druckstabilisationseinrichtung kann vorteilhaft mit einer Ausgangsseite mit dem Neutralraum verbunden sein, z.B. über einen mit dem Neutralraum verbundenen Druckluftanschluss des Druckluftkompressors. Die Druckstabilisationseinrichtung hat den Vorteil, dass ein stabilisierter und damit im wesentlich zeitlich konstanter Zusatzdruck in dem Neutralraum bereitgestellt werden kann, der bei entsprechender Ausgestaltung der Druckluftstabilisationseinrichtung auf einem besonders geeigneten Druckniveau liegen kann, z.B. bei etwa 50% des von dem Druckluftkompressor am Kompressorausgang ausgegebenen Druckniveaus. Es hat sich gezeigt, dass hiermit eine besonders effiziente Vergleichmäßigung der auftretenden Spitzendrehmomente erzielt werden kann.

Gemäß einer vorteilhaften Weiterbildung ist die Druckluftstabilisationseinrichtung am Druckluftkompressor angeordnet. Die Druckluftstabilisationseinrichtung kann beispielsweise an den Druckluftkompressor angeschraubt oder angeflanscht sein. Vorteilhaft ist auch eine in den Kompressor integrierte Ausführung der Druckluftstabilisationseinrichtung.

Für die Zufuhr des Zusatzdrucks zu dem Neutralraum kann der Kompressor vorteilhaft einen eigenen Druckluftanschluss aufweisen. An diesen Druckluftanschluss kann dann die Druckluftstabilisationseinrichtung angeschlossen werden. In einer vorteilhaften Ausgestaltung kann die Zusatzdruck-Zuführung zu dem Neutralraum auch integral in oder an dem Druckluftkompressor vorgesehen sein. Es ist beispielsweise vorteilhaft, in dem Gehäuse des Druckluftkompressors einen Druckluftkanal vorzusehen, der von dem Kompressorausgang über ein federbeaufschlagtes Rückschlagventil zu dem Neutralraum führt. Das federbeaufschlagte Rückschlagventil ist dabei so bemessen, dass aufgrund einer Abstimmung der Federkraft und der wirksamen Ventilbeaufschlagungsfläche aufeinander im Neutralraum das gewünschte Druckniveau des Zusatzdrucks, z.B. etwa 50% des Ausgangsdrucks des Druckluftkompressors, bereitgestellt wird.

Gemäß einer vorteilhaften Weiterbildung der Erfindung ist die Druckluftstabilisationseinrichtung an einem Eingangsanschluss mit einem Druckluftspeicher der Druckluftanlage und an einem ersten Ausgangsanschluss mit dem Neutralraum verbunden. Dies hat den Vorteil, dass an der Eingangsseite der Druckluftstabilisationseinrichtung Druckluft mit hoher Verfügbarkeit und Konstanz zur Verfügung steht, so dass auch an der Ausgangsseite der Druckluftstabilisationseinrichtung der Zusatzdruck mit hoher Verfügbarkeit und Konstanz dem Neutralraum zur Verfügung gestellt werden kann. Vorteilhaft kann die Druckluftstabilisationseinrichtung als Druckbegrenzungsventil oder als Druckregler ausgebildet sein. Derartige Druckluftstabilisationseinrichtungen sind im Handel erhältlich.

Versuche haben ferner ergeben, dass es vorteilhaft ist, dass der Zusatzdruck im Bereich von 40%-60% des Ausgangsdrucks des Druckluftkompressors liegt. Der genaue Wert des optimalen Zusatzdruck ist dabei sowohl kompressorspezifisch als auch im Hinblick auf die jeweilige Anwendung des Druckluftkompressors in der Druckluftanlage zu bestimmen.

Gemäß einer vorteilhaften Weiterbildung der Erfindung ist die Druckluftstabilisationseinrichtung integriert mit einer Druckluftaufbereitungsanlage ausgeführt. Hierdurch kann die Erfindung kompakt und kostengünstig realisiert werden.

Gemäß einer vorteilhaften Weiterbildung der Erfindung ist der Zusatzdruck variabel einstellbar bzw. variabel regelbar. Hierdurch kann der Zusatzdruck im Betrieb des Druckluftkompressors z.B. abhängig von den aktuellen Betriebsbedingungen auf einen gewünschten Wert eingestellt werden.

Gemäß einer vorteilhaften Weiterbildung der Erfindung weist die Druckluftstabilisationseinrichtung eine Eingangshysterese von wenigstens 2 bar auf. Hierdurch können Druckluftverluste aufgrund einer Druckregelung durch die Druckluftstabilisationseinrichtung minimiert werden, wodurch wiederum der gesamte Wirkungsgrad der Drucklufterzeugung durch den Druckluftkompressor optimiert wird.

Gemäß einer vorteilhaften Weiterbildung der Erfindung weist der Druckluftkompressor ein Kurbelgehäuse auf, das mit dem Neutralraum verbunden ist oder wenigstens einen Teil des Neutralraums bildet. Das Kurbelgehäuse weist vorteilhaft das Druckniveau des Neutralraums auf. Dies erlaubt ebenfalls die Verwendung und geringfügige Anpassung vorhandener, handelsüblicher Druckluftkompressoren zur Anwendung der Erfindung.

Das erfindungsgemäße Ziel, das Maximaldrehmoment für den Antrieb des Druckluftkompressors zu reduzieren, kann durch zusätzliche, unterstützende Maßnahmen weiter verbessert werden. Eine solche Maßnahme ist beispielsweise das Vorsehen einer Feder in dem Zylinder, die auf den Kolben einwirkt. Hierbei wird der Kolben in Richtung des Kompressionsraums federkraftunterstützt, so dass ebenfalls die vom Kompressionsraum her infolge der Verdichtung der Luft auf den Kolben einwirkende Kraft zumindest teilweise durch die Federkraft kompensiert wird. Die Feder kann je nach Ausgestaltung des Druckluftkompressors als Zug- oder Druckfeder ausgebildet sein, z.B. als Druckfeder im Kurbelgehäuse. Eine weitere Maßnahme zur Minimierung des Maximaldrehmoments ist das Vorsehen einer Schwungscheibe an der Kurbelwelle. Die Schwungscheibe bewirkt ebenfalls eine Vergleichmäßigung des Drehmomentverlaufs des Antriebsdrehmoments des Druckluftkompressors, mit der Folge, dass ebenfalls die Spitzenwerte des Drehmoments reduziert werden.

Vorteilhaft ist ferner eine Druckluftanlage für ein Fahrzeug mit wenigstens einem Druckluftspeicher und einem Druckluftkompressor der zuvor beschriebenen Art.

Die Erfindung betrifft außerdem ein Verfahren gemäß Anspruch 8. Vorteilhaft kann der Zusatzdruck aus der Druckluftanlage abgeleitet werden. Es ist ebenfalls vorteilhaft, den Neutralraum mit einem stabilisierten Zusatzdruck zu beaufschlagen, z.B. über eine Druckluftstabilisierungseinrichtung.

Die Erfindung wird nachfolgend anhand von Ausführungsbeispielen unter Verwendung von Zeichnungen näher erläutert.

Es zeigen
- Figur 1 -: eine Druckluftanlage für ein Fahrzeug in schematischer Darstellung und
- Figur 2 -: einen prinzipiellen Drehmomentverlauf eines Einzylinder-Druckluftkompressors und
- Figur 3 -: einen prinzipiellen weiteren Drehmomentverlauf eines Einzylinder-Druckluftkompressors.

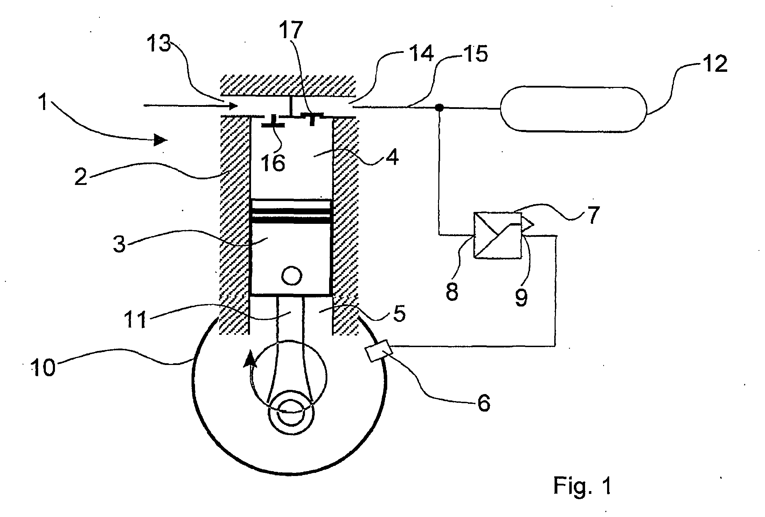

Die Figur 1 zeigt eine Druckluftanlage für ein Fahrzeug mit einem Druckluftkompressor 1 und einem Druckluftspeicher 12, der über eine Druckluftleitung 15 mit dem Druckluftkompressor 1 verbunden ist. An die Druckluftleitung 15 können noch weitere Elemente der Druckluftanlage angeschlossen sein, wie z.B. bei Bremsanlagen in Nutzfahrzeugen ein Lufttrockner und ein Mehrkreisschutzventil. Solche an sich bekannten Elemente von Druckluftanlagen sind in der Figur 1 zur Vereinfachung nicht dargestellt und seien durch die Druckluftleitung 15 symbolisiert.

Der Druckluftkompressor 1 ist als Kolbenkompressor ausgebildet. Er weist einen Zylinder 2 mit einem darin angeordneten Kolben 3 auf. Der Kolben ist, wie bei Kolbenkompressoren bekannt, über ein Pleuel 11 mit einer als Kurbelwelle ausgebildeten Antriebswelle verbunden.

Der Kolben 3 unterteilt einen Innenraum des Zylinders 2 in einen Kompressionsraum 4 und einem Neutralraum 5. In der Darstellung gemäß Figur 1 ist der Kompressionsraum 4 oberhalb des Kolbens 3 angeordnet, der Neutralraum 5 unterhalb des Kolbens 3. Zur pneumatischen Trennung des Kompressionsraumes von dem Neutralraum weist der Kolben 3 eine umlaufende Dichtung auf. Über eine Drehung der Antriebswelle wird der Kolben 3 mittels des Pleuels 11 aufwärts oder abwärts bewegt. Eine Abwärtsbewegung entspricht einer Ansaugphase des Druckluftkompressors 1, in der der Kompressionsraum 4 vergrößert wird. Während der Ansaugphase öffnet sich infolge eines im Kompressionsraum 4 entstehenden Unterdrucks ein Einlassventil 16. Infolge dessen strömt über einen mit der Atmosphäre verbundenen Einlassanschluss 13 des Druckluftkompressors 1 Umgebungsluft in den Kompressionsraum 4. Bei einer Aufwärtsbewegung des Kolbens 3, die einer Verdichtungsphase entspricht, verringert der Kolben 3 das Volumen des Kompressionsraums 4. Die im Kompressionsraum 4 befindliche Luft wird verdichtet, was zu einer Druckerhöhung im Kompressionsraum 4 führt. Hierdurch schließt das Einlassventil 16. Der Druck im Kompressionsraum 4 erhöht sich weiter, bis entweder ein Auslassventil 17 öffnet oder der Kolben 3 seinen oberen Totpunkt erreicht. Das Auslassventil 17 öffnet, wenn der Druck im Kompressionsraum 4 den Druck im Bereich eines den Kompressorausgang bildenden zweiten Ausgangsanschlusses 14 des Druckluftkompressors 1 überschreitet. Der zweite Ausgangsanschluss 14 des Druckluftkompressors ist über die erwähnte Druckluftleitung 15 mit den weiteren Elementen der Druckluftanlage, insbesondere mit dem Druckluftspeicher 12, verbunden.

Auf der dem Kompressionsraum 4 abgewandten Seite des Kolbens 3 befindet sich neben dem Neutralraum 5 ein Kurbelgehäuse 10 des Druckluftkompressors 1. Das Innere des Kurbelgehäuses 10 ist mit dem Neutralraum 5 verbunden, d.h. der Neutralraum 5 befindet sich auf dem Druckniveau des Inneren des Kurbelgehäuses 10. Der Neutralraum 5 kann auch Teil des Inneren des Kurbelgehäuses 10 sein.

Gemäß Figur 1 ist an dem Kurbelgehäuse 10 ein Druckluftanschluss 6 vorgesehen. Über den Druckluftanschluss 6 wird dem Neutralraum 5 der Zusatzdruck zugeführt, und zwar über eine Druckluftstabilisierungseinrichtung 7, die gemäß Figur 1 als Druckregler ausgebildet ist. Der Druckregler 7 weist einen Eingangsanschluss 8 und einen ersten Ausgangsanschluss 9 auf. Der erste Ausgangsanschluss 9 ist über eine Druckluftleitung mit dem Druckluftanschluss 6 verbunden. Der Eingangsanschluss 8 des Druckreglers 7 ist mit der Druckluftleitung 15 verbunden und steht somit mit dem Druckluftspeicher 12 in Verbindung.

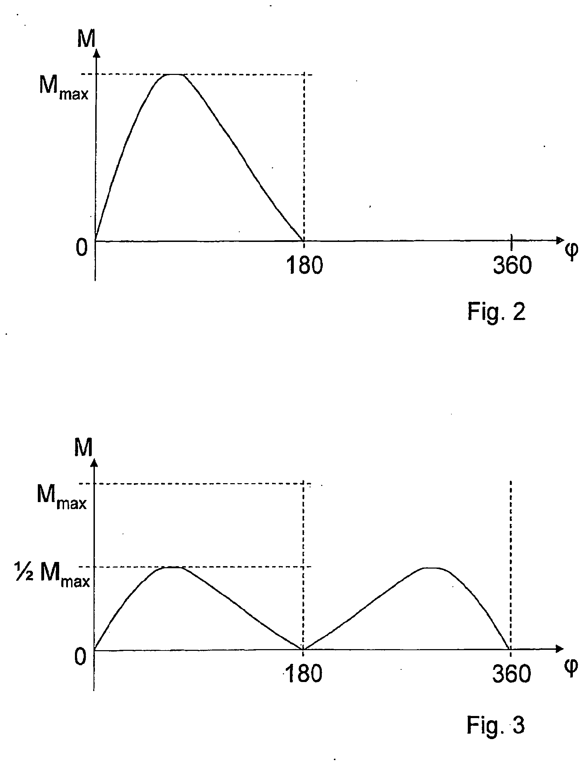

Die Figur 2 zeigt den prinzipiellen Verlauf des zum Antreiben des Druckluftkompressors 1 erforderlichen Drehmoments M, das an der Kurbelwelle des Druckluftkompressors aufgebracht werden muss. Das Drehmoment M ist in Figur 2 über den Drehwinkel ϕ der Antriebswelle des Druckluftkompressors aufgetragen. Der Drehwinkel ϕ ist im Bereich von 0 bis 360° dargestellt, d.h. für eine vollständige Umdrehung der Kurbelwelle. Die Figur 2 zeigt den Drehmomentverlauf bei einem Druckluftkompressor gemäß dem Stand der Technik bzw. bei dem Druckluftkompressor gemäß Figur 1, wenn der Neutralraum nicht mit dem Zusatzdruck beaufschlagt ist.

Wie erkennbar ist, erreicht das Drehmoment M gemäß Figur 2 bei einem Drehwinkel zwischen 0 und 180° den Maximalwert Mₘₐₓ. Zu Beginn erfolgt ein steiler Anstieg des Drehmoments M. Nach Überschreitung des Maximalwerts Mₘₐₓ fällt das Drehmoment M rapide ab. In der zweiten Hälfte einer Umdrehung (Drehwinkel ϕ > 180°C) ist das erforderliche Drehmoment M im Wesentlichen gleich Null. Dieser Verlauf wiederholt sich mit jeder Kurbelwellenumdrehung.

Die Figur 3 zeigt einen Verlauf des Drehmoments M bei demselben Druckluftkompressor gemäß Figur 2, wobei gemäß Figur 3 der Neutralraum 5 mit einem Zusatzdruck in Höhe von etwa dem halben Ausgangsdruck, den der Druckluftkompressor 1 erzeugt, beaufschlagt ist. Wie erkennbar ist, liegt der Maximalwert des Drehmoments M bei etwa der Hälfte des Werts Mₘₐₓ, wobei der Maximalwert nun pro Kurbelwellenumdrehung zweimal erreicht wird, nämlich bei einer Drehposition von unter 180° und einer Drehposition zwischen 180°- 360°.

## Patentansprüche

1. Druckluftkompressor (1) zur Erzeugung von Druckluft für eine Druckluftanlage (12, 15) eines Fahrzeugs, mit einem Zylinder (2) und einem im Zylinder (2) angeordneten Kolben (3), der den Innenraum des Zylinders (2) in einen Kompressionsraum (4), der zur Förderung von Druckluft mit der Druckluftanlage (12, 15) des Fahrzeugs verbindbar ist, und einen Neutralraum (5) unterteilt, wobei der Neutralraum (5) mit einem Zusatzdruck beaufschlagt ist, so dass der Druck im Neutralraum (5) im zeitlichen Mittel oberhalb des Atmosphärendrucks ist, **dadurch gekennzeichnet, dass** eine Druckluftstabilisationseinrichtung (7) vorhanden ist, die mit dem Neutralraum (5) verbunden ist und zur Erzeugung eines stabilisierten Zusatzdrucks eingerichtet ist, der im Bereich von 40 bis 60 % des Ausgangsdrucks des Druckluftkompressors liegt.

2. Druckluftkompressor nach Anspruch 1, **dadurch gekennzeichnet, dass** die Druckluftstabilisationseinrichtung (7) am Druckluftkompressor (1) angeordnet ist, z. B. angeflanscht ist, oder mit dem Druckluftkompressor (1) integriert ausgebildet ist.

3. Druckluftkompressor nach Anspruch 1 oder 2, **dadurch gekennzeichnet, dass** die Druckluftstabilisationseinrichtung (7) an einem Eingangsanschluss (8) mit einem Druckluftspeicher (12) der Druckluftanlage und an einem ersten Ausgangsanschluss (9) mit dem Neutralraum (5) verbindbar ist.

4. Druckluftkompressor nach wenigstens einem der Ansprüche 1 bis 3, **dadurch gekennzeichnet, dass** die Druckluftstabilisationseinrichtung (7) als Druckbegrenzungsventil oder als Druckregler ausgebildet ist.

5. Druckluftkompressor nach wenigstens einem der vorhergehenden Ansprüche, **dadurch gekennzeichnet, dass** die Druckluftstabilisationseinrichtung (7) eine Eingangshysterese von wenigstens 2 bar aufweist.

6. Druckluftkompressor nach wenigstens einem der vorhergehenden Ansprüche, **dadurch gekennzeichnet, dass** der Druckluftkompressor (1) ein Kurbelgehäuse (10) aufweist, das mit dem Neutralraum (5) verbunden ist oder wenigstens einen Teil des Neutralraums (5) bildet, wobei das Kurbelgehäuse (10) das Druckniveau des Neutralraums (5) aufweist.

7. Druckluftanlage für ein Fahrzeug mit wenigstens einem Druckluftspeicher (12) und einem Druckluftkompressor (1) nach wenigstens einem der vorhergehenden Ansprüche.

8. Verfahren zum Betrieb eines Druckluftkompressors (1) zur Erzeugung von Druckluft für eine Druckluftanlage (12, 15) eines Fahrzeugs, wobei der Druckluftkompressor (1) einen Zylinder (2) und einen im Zylinder (2) angeordneten Kolben (3) aufweist, der den Innenraum des Zylinders (2) in einen Kompressionsraum (4), der zur Förderung von Druckluft mit der Druckluftanlage (12, 15) des Fahrzeugs verbindbar ist, und einen Neutralraum (5) unterteilt, wobei der Neutralraum (5) mit einem Zusatzdruck beaufschlagt wird, so dass der Druck im Neutralraum (5) im zeitlichen Mittel oberhalb des Atmosphärendrucks ist, **dadurch gekennzeichnet, dass** der Zusatzdruck im Bereich von 40 bis 60 % des Ausgangsdrucks des Druckluftkompressors liegt.

9. Verfahren nach Anspruch 8, **dadurch gekennzeichnet, dass** der Zusatzdruck ein stabilisierter Druck ist.

## Claims

1. Compressed-air compressor (1) for producing compressed air for a compressed-air system (12, 15) of a vehicle, having a cylinder (2) and having a piston (3) which is arranged in the cylinder (2) and which divides the interior space of the cylinder (2) into a compression chamber (4), which can be connected to the compressed-air system (12, 15) of the vehicle for the purpose of conveying compressed air, and a neutral chamber (5), wherein the neutral chamber (5) is charged with an auxiliary pressure such that the pressure in the neutral chamber (5) is temporally on average higher than atmospheric pressure, **characterized in that** a compressed-air stabilization device (7) is present, which is connected to the neutral chamber (5) and which is configured to produce a stabilized auxiliary pressure which lies in the range from 40 to 60% of the outlet pressure of the compressed-air compressor.

2. Compressed-air compressor according to Claim 1, **characterized in that** the compressed-air stabilization device (7) is arranged, for example flange-mounted, on the compressed-air compressor (1) or is formed integrally with the compressed-air compressor (1) .

3. Compressed-air compressor according to Claim 1 or 2, **characterized in that** the compressed-air stabilization device (7) can be connected at an inlet port (8) to a compressed-air accumulator (12) of the compressed-air system and at a first outlet port (9) to the neutral chamber (5).

4. Compressed-air compressor according to at least one of Claims 1 to 3, **characterized in that** the compressed-air stabilization device (7) is designed as a pressure-limiting valve or as a pressure regulator.

5. Compressed-air compressor according to at least one of the preceding claims, **characterized in that** the compressed-air stabilization device (7) has an inlet hysteresis of at least 2 bar.

6. Compressed-air compressor according to at least one of the preceding claims, **characterized in that** the compressed-air compressor (1) has a crankcase (10) which is connected to the neutral chamber (5) or forms at least a part of the neutral chamber (5), with the crankcase (10) having the pressure level of the neutral chamber (5).

7. Compressed-air system for a vehicle having at least one compressed-air accumulator (12) and a compressed-air compressor (1) according to at least one of the preceding claims.

8. Method for operating a compressed-air compressor (1) for producing compressed air for a compressed-air system (12, 15) of a vehicle, wherein the compressed-air compressor (1) has a cylinder (2) and a piston (3) which is arranged in the cylinder (2) and which divides the interior space of the cylinder (2) into a compression chamber (4), which can be connected to the compressed-air system (12, 15) of the vehicle for the purpose of conveying compressed air, and a neutral chamber (5), wherein the neutral chamber (5) is charged with an auxiliary pressure such that the pressure in the neutral chamber (5) is temporally on average higher than atmospheric pressure, **characterized in that** the auxiliary pressure lies in the range from 40 to 60% of the outlet pressure of the compressed-air compressor.

9. Method according to Claim 8, **characterized in that** the auxiliary pressure is a stabilized pressure.

## Revendications

1. Compresseur d'air comprimé (1) destiné à générer de l'air comprimé pour un système d'air comprimé (12, 15) d'un véhicule, ledit compresseur comprenant un cylindre (2) et un piston (3) qui est disposé dans le cylindre (2) et qui divise l'espace intérieur du cylindre (2) en un espace de compression (4), qui peut être relié au système d'air comprimé (12, 15) du véhicule afin d fournir de l'air comprimé, et en un espace neutre (5), l'espace neutre (5) étant soumis à une pression supplémentaire de sorte que la pression dans l'espace neutre (5) soit en moyenne dans le temps supérieure à la pression atmosphérique, **caractérisé en ce qu'**un dispositif de stabilisation d'air comprimé (7) est prévu qui est relié à l'espace neutre (5) et qui est conçu pour générer une pression supplémentaire stabilisée qui est dans la gamme allant de 40 à 60 % de la pression de sortie du compresseur d'air comprimé.

2. Compresseur d'air comprimé selon la revendication 1, **caractérisé en ce que** le dispositif de stabilisation d'air comprimé (7) est disposé, par exemple bridé, sur le compresseur d'air comprimé (1) ou est conçu pour être intégré au compresseur d'air comprimé (1).

3. Compresseur d'air comprimé selon la revendication 1 ou 2, **caractérisé en ce que** le dispositif de stabilisation d'air comprimé (7) peut être relié à un réservoir d'air comprimé (12) du système d'air comprimé par un raccord d'entrée (8) et à l'espace neutre (5) par un premier raccord de sortie (9).

4. Compresseur d'air comprimé selon l'une au moins des revendications 1 à 3, **caractérisé en ce que** le dispositif de stabilisation de l'air comprimé (7) est conçu comme une soupape de limitation de pression ou comme un régulateur de pression.

5. Compresseur d'air comprimé selon l'une au moins des revendications précédentes, **caractérisé en ce que** le dispositif de stabilisation d'air comprimé (7) présente une hystérésis d'entrée d'au moins 2 bars.

6. Compresseur d'air comprimé selon l'une au moins des revendications précédentes, **caractérisé en ce que** le compresseur d'air comprimé (1) comporte un carter de vilebrequin (10) qui est relié à l'espace neutre (5) ou qui forme au moins une partie de l'espace neutre (5), le carter de vilebrequin (10) ayant le niveau de pression de l'espace neutre (5).

7. Système d'air comprimé destiné à un véhicule comprenant au moins un réservoir d'air comprimé (12) et un compresseur d'air comprimé (1) selon au moins l'une des revendications précédentes.

8. Procédé de fonctionnement d'un compresseur d'air comprimé (1) destiné à générer de l'air comprimé pour un système d'air comprimé (12, 15) d'un véhicule, le compresseur d'air comprimé (1) comportant un cylindre (2) et un piston (3) qui est disposé dans le cylindre (2) et qui divise l'espace intérieur du cylindre (2) en un espace de compression (4), qui peut être relié au système d'air comprimé (12, 15) du véhicule afin de transporter l'air comprimé, et un espace neutre (5), l'espace neutre (5) étant soumis à une pression supplémentaire de sorte que la pression dans l'espace neutre (5) soit en moyenne dans le temps supérieure à la pression atmosphérique, **caractérisé en ce que** la pression supplémentaire est dans la gamme allant de 40 à 60 % de la pression de sortie du compresseur d'air comprimé.

9. Procédé selon la revendication 8, **caractérisé en ce que** la pression supplémentaire est une pression stabilisée.
